# EUROPÄISCHE PATENTSCHRIFT

(11) **EP 1 844 999 B1**
(45) Veröffentlichungstag und Bekanntmachung des Hinweises auf die Patenterteilung: **27.01.2010**
(21) Anmeldenummer: 07003833.6
(22) Anmeldetag: 24.02.2007
(51) Int. Cl.: B60T 8/36, B60T 13/66, B60T 15/02, B60T 15/18

(54) **Relaisventil**
Relay valve
Soupape de relais

(30) Priorität: 13.04.2006 DE 102006017503
(43) Veröffentlichungstag der Anmeldung: 17.10.2007
(73) Patentinhaber: WABCO GmbH, 30453 Hannover (DE)
(72) Erfinder: Christoffers, Bernd, 30974 Wennigsen (DE); Leske, Olaf, 30851 Langenhagen (DE)
(74) Vertreter: Günther, Constantin

(56) Entgegenhaltungen:
- EP-A1- 0 594 998
- EP-A2- 0 169 303
- DE-A1- 1 951 213
- DE-A1- 2 148 572

## Beschreibung

Die Erfindung bezieht sich auf ein Relaisventil in Kraftfahrzeugen mit Drucklufteinrichtungen, insbesondere auf Relaisventile in Druckluftbremsanlagen von Lastkraftwagen.

Das erfindungsgemäße Relaisventil eignet sich allgemein für den Einsatz in Geräten mit einem Relaiskolben und einem Plattenventil, wo Druckluftströmungen aus verschiedenen Richtungen aufeinander treffen. Als mögliche Einsatzgebiete seien Relaisventile in elektronischen Bremssystemen (EBS) und Antiblockierbremsanlagen von Zugfahrzeugen und Anhängerfahrzeugen, insbesondere in einer zentralen Bremseinheit (CBU: Central Brake Unit), Achsmodulatoren, Radmodulatoren, Proportionalrelaisventile, Bremskraftregler und Lastregler genannt.

Es ist, beispielsweise aus der EP 0 594 998 A1 bekannt bei Druckluftbremsanlagen in Lastkraftwagen sogenannte Relaisventile einzusetzen, welche mit einem geringen Luftdruck hohe Luftdrücke, z. B. in den Bremsen, steuern. Diese Relaisventile werden beim Betrieb des Kraftfahrzeugs regelmäßig be- und entlüftet.

Aufgabe der Erfindung ist es, eine schnelle Entlüftung des Relaisventils zu ermöglichen.

Diese Aufgabe wird durch das in Patentanspruch 1 beschriebene Relaisventil gelöst.

Ein Vorteil des erfindungsgemäßen Relaisventils besteht darin, dass durch eine gerichtete Luftführung der verwendeten Druckluft turbulente Strömungen bei der Entlüftung verringert werden, wodurch eine schnellere und leisere Entlüftung erfolgt.

In einer ersten vorteilhaften Ausführungsform wird als eine Luftführungseinrichtung ein Rohr verwendet.

In einer zweiten vorteilhaften Ausführungsform der Erfindung wird zur gerichteten Luftführung ein Rohr an einem ersten Gehäuseteil des Relaisventils angebracht oder angeformt. Das Rohr kann hierbei z. B. mit dem ersten Gehäuseteil verklebt, verschraubt, verschweißt oder verpresst werden. Ferner ist es auch möglich das Rohr einstückig, z. B. durch angießen, an das erste Gehäuseteil anzuformen.

In einer dritten vorteilhaften Ausführungsform wird zur gerichteten Luftführung ein Rohr am Relaiskolben des Relaisventils angebracht oder angeformt. Das Rohr kann hierbei z. B. mit dem Relaiskolben verklebt, verschraubt, verschweißt oder verpresst werden. Ferner ist es auch möglich das Rohr einstückig, z. B. durch angießen, an den Relaiskolben anzuformen.

In einer vierten vorteilhaften Ausführungsform wird das erfindungsgemäße Relaisventil in einer zentralen Bremseinheit (CBU: Central Brake Unit) verwendet. Die zentrale Bremseinheit fasst beispielsweise die Funktionen eines Bremswertgebers, eines Proportionalrelaisventils sowie eines Zentralmoduls in einem Gerät zusammen, wobei in dem Zentralmodul alle wesentlichen Bremsmanagementfunktionen für die Vorderachse, die Hinterachse und die Anhängerdruckkontrolle durchgeführt werden.

Die Erfindung wird im Folgenden anhand von Ausführungsbeispielen unter Verwendung von Zeichnungen beschrieben. Für gleichartige Bauteile werden gleiche Bezugszeichen verwendet. Hierbei zeigt
- Fig. 1: eine Ausführung eines Relaisventils gemäß dem Stand der Technik,
- Fig. 2: eine Ausführung eines erfindungsgemäßen Relaisventils mit am ersten Gehäuseteil des Relaisventils angeordnetem Rohr,
- Fig. 3: eine Ausführung eines erfindungsgemäßen Relaisventils mit am Relaiskolben des Relaisventils angeordnetem Rohr im entlüfteten Zustand, und
- Fig. 4: eine Ausführung eines erfindungsgemäßen Relaisventils mit am Relaiskolben des Relaisventils angeordnetem Rohr im belüfteten Zustand.

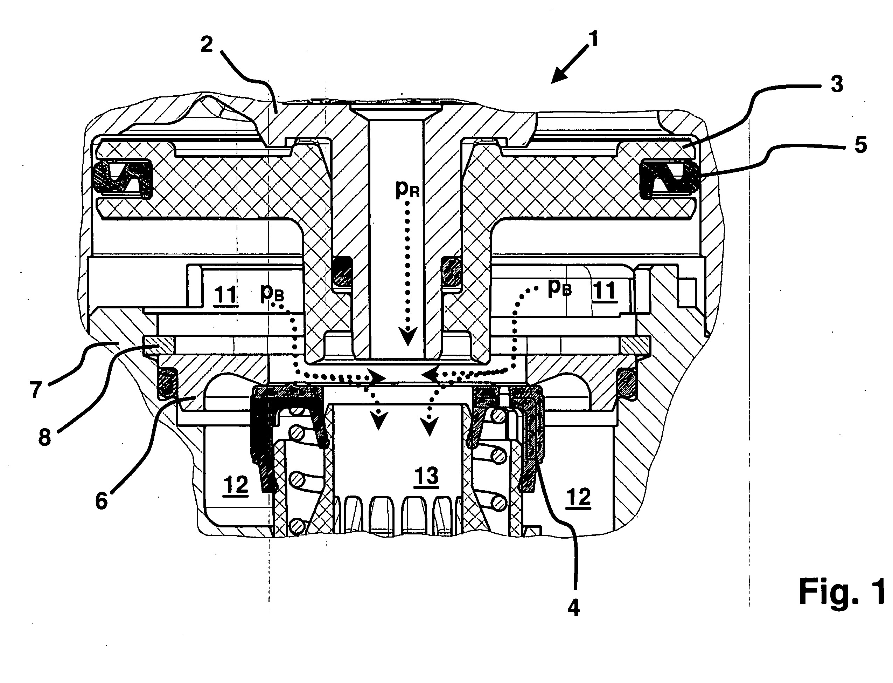

Fig. 1 zeigt eine Ausführung eines Relaisventils gemäß dem Stand der Technik im entlüfteten Zustand. Das Relaisventil (1) weist hierbei ein erstes Gehäuseteil (2) und ein zweites Gehäuseteil (7) auf, wobei zwischen den Gehäuseteilen (2, 7) ein Relaiskolben (3) angeordnet ist, welcher mittels eines Dichtelements (5), beispielsweise ein O-Ring oder ein Z-Ring, gegenüber dem ersten Gehäuseteil (2) abgedichtet ist. Ferner weist das Relaisventil (1) einen Dichtsitz (6) auf, welcher durch einen Sicherungsring (8) am zweiten Gehäuseteil (7) gehalten wird. Im entlüfteten Zustand des Relaisventils (1) liegt am Dichtsitz (6) ein Plattenventil (4) an, so dass Hauptluftdruck p_{B}, z. B. von einer Bremse, von einem kreisförmigen ersten Raum (11) und in einen dritten Raum (13) gelangen kann. Ferner erfolgt zeitgleich über eine axiale Öffnung im ersten Gehäuseteil (2) auch eine Entlüftung eines Redundanzluftdruckes p_{R}, z. B. von einem Anhängersteuerventil, in den dritten Raum (13). Der Redundanzdruck p_{R} weist hierbei einen geringeren Luftdruck als der Hauptluftdruck p_{B} auf. Der aus dem ersten Raum (11) austretende Hauptluftdruck p_{B} strömt hierbei nicht nur in den dritten Raum (13), sondern auch teilweise in die axiale Öffnung im ersten Gehäuseteil (2), wodurch der aus dem ersten Gehäuseteil (2) austretende Redundanzdruck p_{R}, der ja einen geringeren Luftdruck als der Hauptluftdruck p_{B} aufweist, behindert bzw. gebremst wird. Aufgrund der zumindest teilweise entgegengesetzt gerichteten Luftdrücke können sich Verwirbelungen bilden, welche die schnelle Entlüften verzögern. Außerdem kann eine zusätzliche Geräuschentwicklung auftreten.

Beim Belüften erfolgt durch eine senkrechte Verschiebung des Relaiskolbens (1) nach unten eine Betätigung des Plattenventils (4). Hierdurch besteht keine Verbindung mehr zwischen dem ersten Raum (11) und dem dritten Raum (13), sondern es wird der erste Raum (11) mit einem zweiten Raum (12) verbunden.

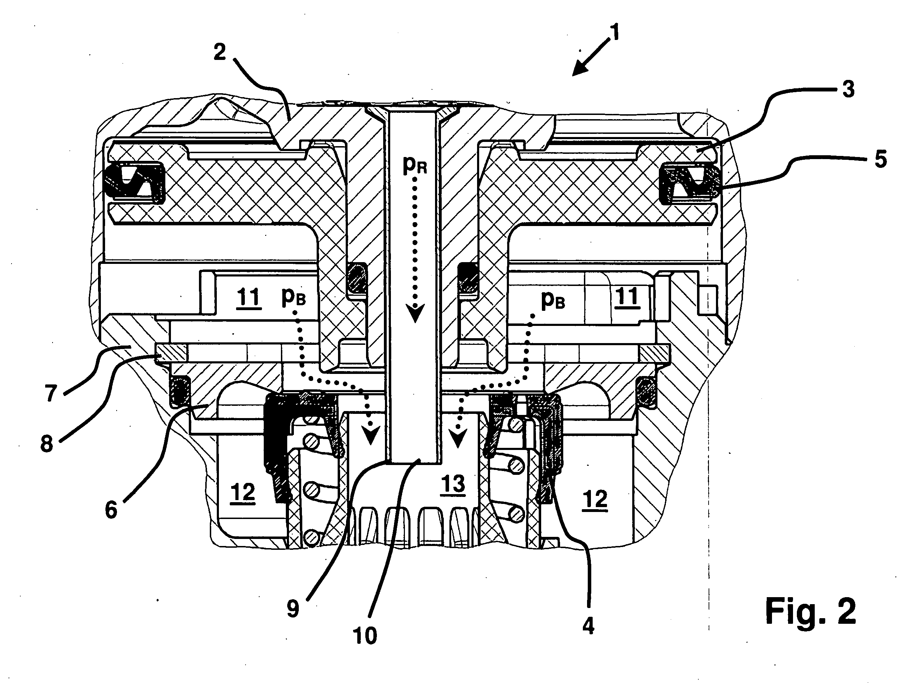

Fig. 2 zeigt eine Ausführung eines erfindungsgemäßen Relaisventils (1) mit am ersten Gehäuseteil (2) des Relaisventils (1) angeordnetem Rohr (9). Im Unterschied zu dem in Fig. 1 beschriebenen Aufbau befindet sich am ersten Gehäuseteil (2) ein Rohr (9), dessen Mündung (10) in axialer Richtung unterhalb des Dichtsitzes (6) endet. Beim Entlüften des Relaisventils (1) strömt der Hauptluftdruck p_{B} aus dem ersten Raum (11) gegen das Rohr (9) und wird durch das Rohr (9) in Richtung des dritten Raums (13) geführt bzw. gerichtet. Durch die Führung des Hauptluftdrucks p_{B} strömt dieser parallel zu dem Redundanzdruck p_{R} in den dritten Raum (13) ein, wodurch die Gefahr möglicher Verwirbelungen verringert wird und der Redundanzdruck p_{R} nicht durch den Hauptluftstrom p_{B} gebremst wird. Hierdurch wird eine schnellere Entlüftung erzielt. Weiterhin kann der durch das Rohr (9) geführte Hauptluftdruck p_{B} nicht über die Mündung (10) strömen, wodurch der Gesamtpegel der Entlüftungsgeräusche vermindert wird.

Das Rohr (9) kann hierbei einstückig an dem ersten Gehäuseteil (2) angeformt sein. Das erste Gehäuseteil (2) und das Rohr (9) können beispielsweise als ein Bauteil in einem Herstellungsprozess geformt werden. Ferner kann auch das Rohr (9) mit dem ersten Gehäuseteil (2) verklebt, verschweißt, verschraubt oder verpresst werden. Es ist auch denkbar, das Rohr (9) an das erste Gehäuseteil (2) anzugießen.

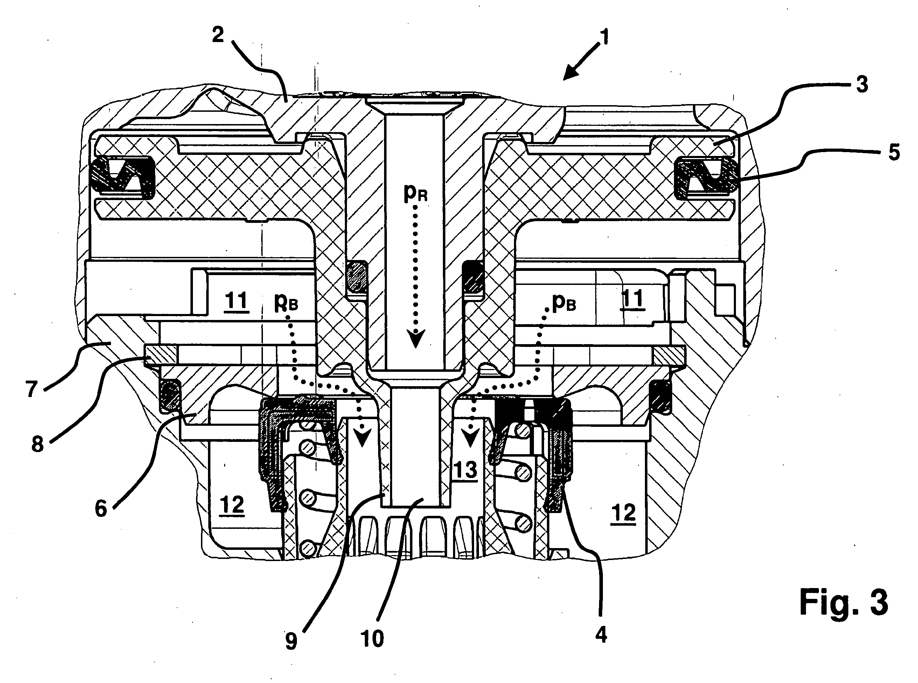

Fig. 3 zeigt eine Ausführung eines erfindungsgemäßen Relaisventils mit am Relaiskolben (3) des Relaisventils (1) angeordnetem Rohr (9) im entlüfteten Zustand. Der Unterschied zu dem in Fig. 2 dargestellten Relaisventil (1) besteht darin, dass das Rohr (9) am Relaiskolben (3) und nicht am ersten Gehäuseteil (2) angeordnet ist. Die Funktionsweise ist identisch zu der in Fig. 2 beschriebenen Ausführung.

Das Rohr (9) kann hierbei einstückig an dem Relaiskolben (3) angeformt sein. Der Relaiskolben (3) und das Rohr (9) können beispielsweise als ein Bauteil in einem Herstellungsprozess geformt werden. Ferner kann auch das Rohr (9) mit dem Relaiskolben (3) verklebt, verschweißt, verschraubt oder verpresst werden. Es ist auch denkbar, dass Rohr (9) an dem Relaiskolben (3) anzugießen.

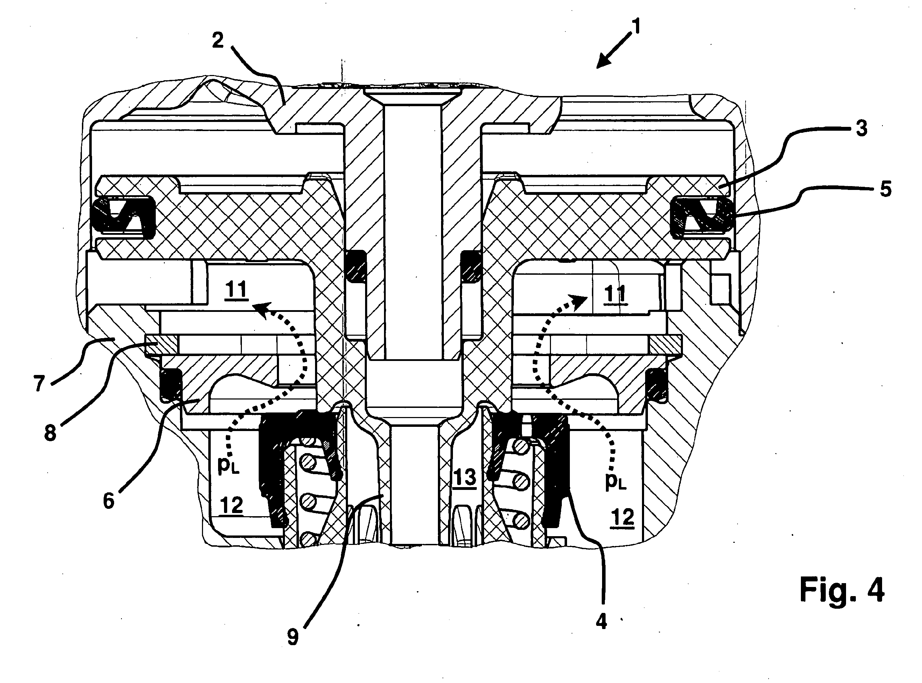

Fig. 4 zeigt eine Ausführung eines erfindungsgemäßen Relaisventils (1) mit am Relaiskolben (3) des Relaisventils (1) angeordnetem Rohr (9) im belüfteten Zustand. Der Aufbau ist identisch zu dem in Fig. 3. Während der Belüftung betätigt der Relaiskolben (3) das Plattenventil (4), wodurch dieses von dem Dichtsitz (6) abhebt, so dass ein Belüftungsdruck p_{L} von dem zweiten Raum (12) in den ersten Raum (11) strömen kann, während der Durchlass zwischen dem ersten Raum (11) und dem dritten Raum (13) durch den am Plattenventil (4) anliegenden Relaiskolben (3) verschlossen wird.

## Patentansprüche

1. Relaisventil in einem Kraftfahrzeug mit Drucklufteinrichtung, insbesondere für den Einsatz in Druckluftbremsanlagen von Lastkraftwagen, wobei das Relaisventil ein erstes Gehäuseteil (2), ein zweites Gehäuseteil (7) und einen Relaiskolben (3) umfasst, wobei am ersten Gehäuseteil (2) oder am Relaiskolben (3) eine Luftführungseinrichtung (9) für die Entlüftung in die Atmosphäre angeordnet ist, **dadurch gekennzeichnet, dass** das Relaisventil (1) ein Plattenventil (4) mit einem Dichtsitz (6) umfasst, wobei die Luftführungseinrichtung (9) in axialer Richtung unterhalb des Dichtsitzes (6) endet.

2. Relaisventil nach Anspruch 1, **dadurch gekennzeichnet, dass** die gesonderte Luftführungseinrichtung (9) so ausgebildet ist, dass eine Richtwirkung der von der Luftführungseinrichtung (9) geführten Druckluft über das Ende des ersten Gehäuseteils (2) oder des Relaiskolbens (3) hinaus erzielt wird.

3. Relaisventil nach Anspruch 1 oder 2, **dadurch gekennzeichnet, dass** die Luftführungseinrichtung (9) als ein Rohr ausgebildet ist.

4. Relaisventil nach mindestens einem der Ansprüche 1 bis 3, **dadurch gekennzeichnet, dass** die Luftführungseinrichtung (9) einstückig an dem ersten Gehäuseteil (2) oder an dem Relaiskolben (3) angeformt ist.

5. Relaisventil nach mindestens einem der Ansprüche 1 bis 3, **dadurch gekennzeichnet, dass** die Luftführungseinrichtung (9) mit dem ersten Gehäuseteil (2) oder mit dem Relaiskolben (3) verklebt, verschweißt oder verpresst ist

6. Relaisventil nach mindestens einem der Ansprüche 1 bis 3, **dadurch gekennzeichnet, dass** die Luftführungseinrichtung (9) mit dem ersten Gehäuseteil (2) oder mit dem Relaiskolben (3) verschraubt ist.

7. Relaisventil nach mindestens einem der Ansprüche 1 bis 3, **dadurch gekennzeichnet, dass** die Luftführungseinrichtung (9) an dem ersten Gehäuseteil (2) oder an dem Relaiskolben (3) angegossen ist.

8. Relaisventil nach mindestens einem der vorherigen Ansprüche, **dadurch gekennzeichnet, dass** das Relaisventil in einer zentralen Bremseinheit einer Druckluftbremsanlage eines Lastkraftwagens verwendet wird.

## Claims

1. Relay valve in a motor vehicle, with a compressed-air device, in particular for use in compressed-air brake systems of heavy goods vehicles, the relay valve comprising a first housing part (2), a second housing part (7) and a relay piston (3), an air-routing device (9) for venting into the atmosphere being arranged on the first housing part (2) or on the relay piston (3), **characterized in that** the relay valve (1) comprises a plate valve (4) with a sealing seat (6), the air-routing device (9) terminating in the axial direction beneath the sealing seat (6).

2. Relay valve according to Claim 1, **characterized in that** the separate air-routing device (9) is designed such that a straightening action of the compressed air routed by the air-routing device (9) is achieved over and beyond the end of the first housing part (2) or of the relay piston (3).

3. Relay valve according to Claim 1 or 2, **characterized in that** the air-routing device (9) is designed as a tube.

4. Relay valve according to at least one of Claims 1 to 3, **characterized in that** the air-routing device (9) is formed in one piece on the first housing part (2) or on the relay piston (3).

5. Relay valve according to at least one of Claims 1 to 3, **characterized in that** the air-routing device (9) is adhesively bonded, welded or pressed together with the first housing part (2) or with the relay piston (3).

6. Relay valve according to at least one of Claims 1 to 3, **characterized in that** the air-routing device (9) is screwed to the first housing part (2) or to the relay piston (3).

7. Relay valve according to at least one of Claims 1 to 3, **characterized in that** the air-routing device (9) is cast on the first housing part (2) or on the relay piston (3).

8. Relay valve according to at least one of the preceding claims, **characterized in that** the relay valve is used in a central brake unit of a compressed-air brake system of a heavy goods vehicle.

## Revendications

1. Soupape de relais dans un véhicule automobile comprenant un système d'air sous pression, notamment pour l'utilisation dans des installations de frein à air sous pression de véhicules lourds, la soupape à relais présentant une première partie de boîtier (2), une deuxième partie de boîtier (7) et un piston de relais (3), un système de guidage d'air (9) pour la ventilation vers l'atmosphère étant disposé au niveau de la première partie de boîtier (2) ou du piston de relais (3), **caractérisée en ce que** la soupape de relais (1) comprend une soupape à plaque (4) avec un siège d'étanchéité (6), le système de guidage d'air (9) se terminant dans la direction axiale sous le siège d'étanchéité (6).

2. Soupape de relais selon la revendication 1, **caractérisée en ce que** le système de guidage d'air séparé (9) est réalisé de telle sorte qu'un effet d'orientation de l'air sous pression guidé par le système de guidage d'air (9) soit produit au-delà de l'extrémité de la première partie de boîtier (2) ou du piston de relais (3).

3. Soupape de relais selon la revendication 1 ou 2, **caractérisée en ce que** le système de guidage d'air (9) est réalisé sous forme de tube.

4. Soupape de relais selon au moins l'une quelconque des revendications 1 à 3, **caractérisée en ce que** le système de guidage d'air (9) est formé d'une seule pièce sur la première partie de boîtier (2) ou sur le piston de relais (3).

5. Soupape de relais selon au moins l'une quelconque des revendications 1 à 3, **caractérisée en ce que** le système de guidage d'air (9) est collé, soudé ou pressé contre la première partie de boîtier (2) ou le piston de relais (3).

6. Soupape de relais selon au moins l'une quelconque des revendications 1 à 3, **caractérisée en ce que** le système de guidage d'air (9) est vissé à la première partie de boîtier (2) ou au piston de relais (3).

7. Soupape de relais selon au moins l'une quelconque des revendications 1 à 3, **caractérisée en ce que** le système de guidage d'air (9) est moulé sur la première partie de boîtier (2) ou le piston de relais (3).

8. Soupape de relais selon au moins l'une quelconque des revendications précédentes, **caractérisée en ce que** la soupape de relais est utilisée dans une unité de freinage centrale d'une installation de frein à air sous pression d'un véhicule lourd.
